# EUROPEAN PATENT APPLICATION

(11) **EP 1 439 643 A1**
(43) Date of publication of application: **21.07.2004**
(21) Application number: 02779581.4
(22) Date of filing: 01.10.2002
(51) Int. Cl.: H04B 7/26, H04B 10/22, H04M 1/02

(54) **MOBILE TELEPHONE FOR PERSONAL COMMUNICATION**

(30) Priority: 02.10.2001 ES 200102200
(71) Applicant: Consulting, Comunicacio I Disseny, S.L., 08029 Barcelona (ES)
(72) Inventor: MUNTANE CONDEMINES, Miguel, E-08029 Barcelona (ES)
(74) Representative: SUGRANES - VERDONCES - FERREGÜELA
(86) International application number: PCT/ES2002/000458
(87) International publication number: WO 2003/030406

(57) **Abstract**

It comprises a fixed group composed of a loudspeaker (2), microphone (5), screen (3) and keyboard (4), capable of being handled by the user in contiguity to same; transmission means of the communication by means of infrared optical signals, totally free of microwave-emitting functions; measurement means of the overall microwave power and, possibly, a microwave receiver that enables it to receive messages with the connection signal and which has means for establishing direct communication by infrared optical signal with other analogous mobile phones.

There can be communication means with infrared optical sensors (15), placed inside and outside buildings (21), urban road poles (20) and/or means of transport, connected by wire or infrared optic with an interior exchange server (16) free of the microwave emitting function and which can transmit the signal to the fixed telephone network and to another interior exchange server (16).

## Description

### Technical sector of the invention.-

The present invention refers to a mobile telephone for personal communication which lacks a microwave emission facility and which is adapted for detecting microwave immissions and is of the type which comprises a fixed group of basic elements in mobile personal communication, such as a loudspeaker, microphone, screen and keyboard, capable of being handled by the user in contiguity to same.

### State of the art.-

Mobile phone use has spread rapidly due to its easy handling, comfort, freedom of movements and low installation costs, however, the art is characterised in that the long-term health protection measures are neither documented nor published.

Public health protection should value the "Precaution Principle" and scientific studies and prove the "harmlessness" of these systems. Since the 1960s it has been known that these microwave radiations penetrate the brain and can cause headaches, according to research by Dr. Frey.

The opinion of the world expert Dr. Robert O. Becker, twice nominated for the Nobel Prize, states that the premise which was applied by physicists and engineers was incorrect from the start.

Official technical information exists, duly documented since November 1996, which makes it possible to inform the user: the power which a present-day mobile phone emits inside the user's brain may exceed the value limit established by CENELEC 50166-2 for informed "workers": "2250 microW/cm2" and limited to the maximum exposure time of "six minutes".

These microwave radiations which are emitted inside the user's brain may be millions of times greater than the natural radiation of the Sun. The microwave radiations may alter cell-to-cell communication and, as passive radiation when in great proximity, may affect children, foetuses and pregnant women.

First of all, a distinction should be made between the radiation emitted by a personal mobile phone unit and the permanent radiation produced by base-stations.

A mobile phone emits microwave pulses which form a large sphere of more than one thousand metres' radius and has the user in the centre. This power is greater than the natural radiation of the Sun, even reaching a distance of eighty metres and can alter chromosomes up to a distance of eight metres from the mobile phone.

A base-station emits beam-shaped microwave pulses which can reach distances of up to 30,000 metres and exceed the level of the Sun's natural power up to a distance of 3,000 metres. It can alter chromosomes up to a distance of 300 metres. In base-stations this radiation is emitted day and night, 168 hours a week, over the passive population who lack both information and control.

On June 4, 2001, RCR Wireless Magazine published that a mobile phone can alter myelin neurones.

A 1995 Nokia patent "suggests that" a mobile phone's radiation could attack the myelin cell groups which isolate neuronal nerve fibres and permit the electrical signals to be sent to the whole body. It also "suggests that" a mobile phone "in the worst case" could cause a glioma, a type of tumour in the side of the brain. Continuous exposure to these radio-frequency radiations suggest that they can weaken the myelin layers and possibly affect the ability to hear, vertigo, etc.

In order to examine the current health risk on the user himself and on the passive population in close proximity, it is suggested that one focuses attention on "Two important documented health alterations": Haematoencephalic barrier alteration and Chromosome alteration, which are briefly commented on below:
1^{st}. Haematoencephalic barrier alteration. It has been documented and published since 1972. The information provided by Dr. Neil Cherry from New Zealand; in accordance with the research carried out at Lund University, Sweden, by Dr. Lief Salford, states that using the mobile phone for more than two minutes can open the Haematoencephalic barrier and allow blood viruses, including prions, to enter the brain.
2^{nd}. Chromosome alteration. Documented since the year 1995 by Dr. H. Lai, Washington. He reports that mobile phone microwave radiation can alter the chromosomes at a low power level of 0.1 microW/cm2 and with the risk of health alterations which can manifest themselves in the long-term.

In 1994, Dr. L. V. Klitzing published the alteration in the electroencephalogram (EEG), which becomes manifest for this level of power of 0.1 microW/cm2.

The researcher Dr. Neil Cherry from New Zealand sets out the symptoms described in over 40 studies which show the adverse effects of mobile phone radiation. These biological alterations are known as "Microwave syndrome".

In order to establish health protection measures it is necessary to first inform the affected population. The information must make it possible for the user to have a real, informed and accurate choice about the high powers of radiation to which he is subject and the possible safety distances.

In this respect the "Nine degrees of sanitary risk scale" has been developed, which was presented in November 1999 at the Bio-electromagnetism Congress in Alcala de Henares, Madrid (Spain). This scale makes it possible to establish nine degrees of risk and is logarithmic, that is, the power increases 10 times in each degree of the scale.

The increase in the artificial power emitted in relation to the natural level makes it possible to establish nine *levels of long-term sanitary risk*. This informs in an accurate, easy and understandable way about the high degree of current risk and makes it possible to develop protection measures, with an evaluation of the safety distances for mobile phone use and of the placement of the base-stations.

In order to protect health, a new "Safety Coefficient of 50,000" is proposed as a Precaution Principle, which should substitute the current "Coefficient of 5", which does not document the risk level. The "Nine degree scale" makes it comprehensible to the mobile phone user that his head is inside the thermal epicentre (DEGREE 9).

Documented sanitary risk and known as "thermal alteration" on part of the brain, eye, ear and in particular, the user's hand, as set out below in Table 1.

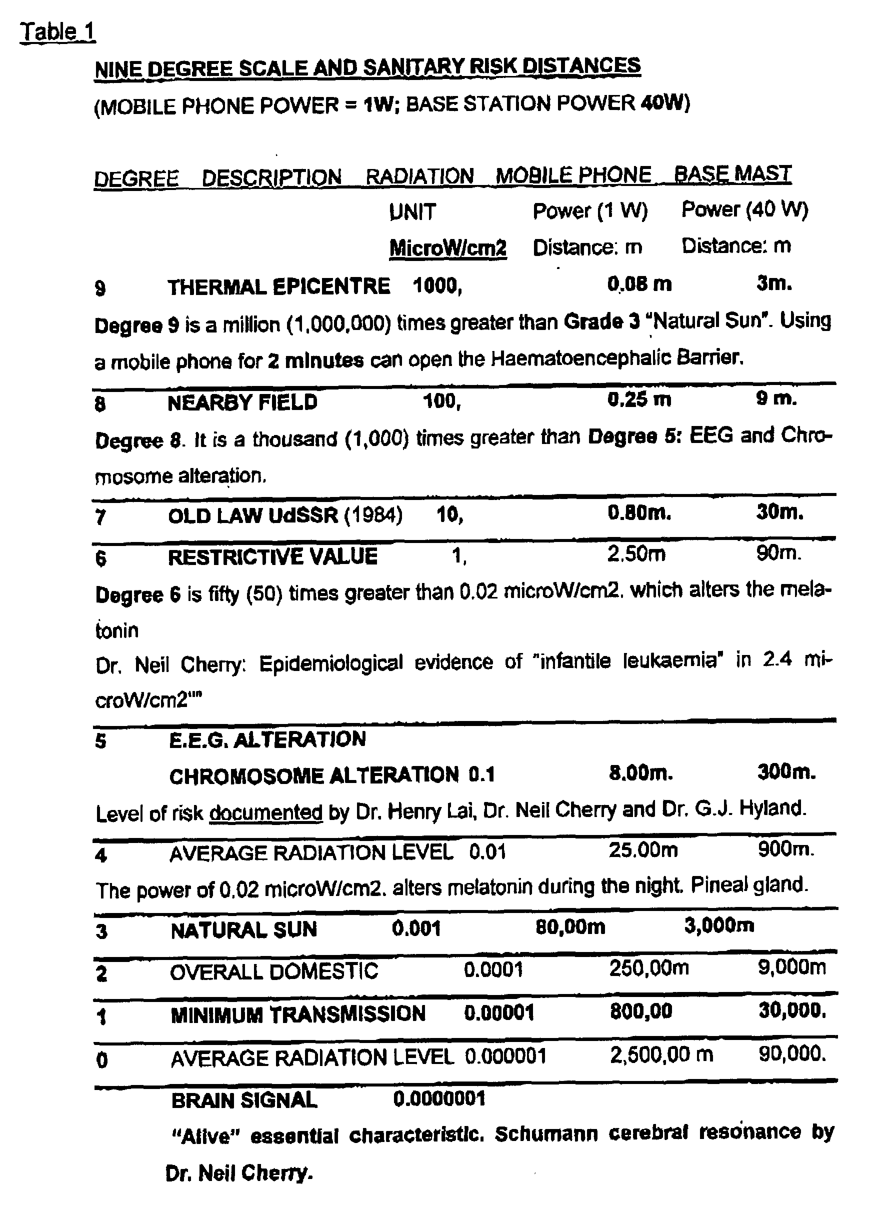

The present patent provides a novel and revolutionary means of protecting long-term health by means of the fulfilment of this new safety factor of 50,000.

A mobile phone subjects the brain to radiation powers which can be thousands of millions of times greater to that of the natural brain signal. They are pulse radiations which signify a high health risk.

This scale makes it possible to prove that the passive population currently suffers the DEGREES 6, 7 and 8 when in close proximity, within indoor locations, means of transport and lifts.

In base-stations in New Zealand the power limit for the permanent radiation for base-stations of 2 microW/cm2 has been "legislated" since 1995, the risk of suffering infantile leukaemia having been officially documented at the level of 2.4 microW/cm2.

But, in Europe, since the year 1999, the power of 450 micrW/cm2 is recommended for the permanent radiation for people, which is 225 times higher than the power already legislated for in New Zealand for the documented risk of causing infantile leukaemia. It would make sense to inform in Europe about the "health risk distances" and the protection measures.

In current mobile phones there is, what can be called, "mobile phone power error", according to which a mobile phone can reach 2W of power. But according to the "official thermal regulation" based on the SAR (Specific Absorption Rate), this power should not exceed 0.6 W. Moreover, the new generation phones with images demand great power.

The German document DE 295 08 792 U1 describes a mobile phone with a protection device against radiations, which comprises a receiving device for electromagnetic waves of radio-frequency and/or microwaves; a transmitter device for electromagnetic waves of radio-frequency and/or microwaves and an antenna, which is separated from the personal communication group and made up of a loudspeaker element; a microphone; a keyboard; a screen and a housing, which are joined by a telescopic joint, making it possible to keep the transmitter group separated from the user and integral to the mobile phone housing.

On the other hand, the patent DE 43 30 436 A1 describes a cellular mobile phone embodiment in which the direct communication with the microwave transmitter group is established cordlessly.

The patent EP 1 091 541 also refers to the reduction of microwave power on the user and for this it separates it from the microwave transmitter by means of a support handle, permitting it to protect the user's hand in the health safety distance and place the microwave radiation group away from the user, which establishes the communication by cable or cordless connection.

In order to be able to "guarantee" the long-term health safety it is necessary to recognise that the separation distance from a mobile phone should be 20 metres and its use be limited to public spaces and means of transport.

However, the placement of base-stations, which emit day and night, with the risk of altering melatonin, recommends that this distance should be *kilometres for the placement of base-stations outside of urban centres.*

Present in these documents is a microwave radiation group in the users' surroundings and which do not present an industrial solution to the present-day cordless communication switchboards in houses and which also have analogous problems to those of the mobile phone itself.

Nevertheless, the health risk of chromosome alteration requires the mobile phone to be separated by a distance of eight metres in relation to the user and the public in general. But the risk of altering melatonin should also be considered and thus increase the distances, which the present-day mobile phones do not allow for, including the aforementioned documents.

The patent WO 99/67935, describes a mobile phone with a protection device against radiations generated during use and measurement of same, which makes it possible to be free of this problem. To this end, it describes the collective use of a single transmitter-receiver group of microwave radiations, with a personal communication group for each user. The transmitter-receiver group can be arranged remotely as regards the users and placed in the upper part of buildings and means of transport, providing a practical solution to all the safety problems and drawbacks currently posed and which provides a high level of long-term health protection for the user against the risks associated with electromagnetic radiation.

In short, the mobile phone in WO 99/67935 comprises a receiving device for electromagnetic waves of radio-frequency and/or microwaves; a transmitter device for electromagnetic waves of radio-frequency and/or microwaves; and an antenna which forms a moveable group of elements, or receiver-transmitter radiation group, which is equipped with a handle for the user. The handle is telescopically extendible and protects the user's hand and is capable of being separated from the personal communication group and communicated with the latter cordlessly, or by means of a wire. In this way, the moveable group can be held by the user's hand, in such a way that it remains at a distance greater than 0.08 or 0.12 metres from the radiation receiver-transmitter group. The radiation receiver-transmitter group is able to be moveably inserted by fitting into a housing provided for such purpose in the housing. Thus, during the communication, the radiation receiver-transmitter group can be separated from the personal communication group, which is able to be separated at a sufficient distance so that the power density of the radiation energy reaching the personal communication group, and therefore the user, is less than said maximum predetermined value, maintaining the communication between the radiation receiver-transmitter group and the personal communication group, either by said wire, or by cordless means. This permits the power density reaching the user to be the lowest possible, reducing the present mobile phone radiation by more than 99%.

In relation to cordless communication switchboards, which are not referred to in the previous patents, it should be pointed out that they are placed within the home and can emit radio-frequency day and night, like small base-stations with an outside range of 300 metres and an inside one of 50 metres.

These new systems have been introduced without health information on the user and the families affected and without giving information about the power, safety distances and, in particular, about the potential health risk they have.

The present patent puts forward an improvement in the state of the art by proposing a new and revolutionary mobile phone communications system, which uses personal communication groups without a microwave transmitter and which communicates with cordless switchboards placed inside the home and means of transport, which also lack the function of emitting microwaves, in order to protect the health in cordless and mobile communication in general, with the aim of having the "home free of microwave transmitters which lack protection shields".

In brief, making it possible to achieve the health goal of limiting the maximum radiation on people to DEGREE 5 of the aforementioned Scale.

### Explanation of the invention.-

To such purpose, the object of the present invention is a mobile phone of the previously mentioned type, which in essence is characterised in that it comprises transmission means of the communication by means of infrared optical signals and is totally free of microwave-emitting functions.

According to another feature of the invention, the mobile phone comprises measurement means of the overall microwave power which the user suffers as an immision; and it has a microwave receiver that enables it to receive messages with the connection signal and has means for establishing direct communication by infrared optical signal with other analogous mobile phones. Thus, in addition to having the power measurement function implemented, the mobile phone can be used as a "pager".

The mobile phone according to the invention can comprise communication means with infrared optical sensors, placed inside and outside buildings, urban road posts and inside and outside means of transport, connected by wire or infrared optic with an interior exchange server which is free of the microwave emitting function and which can transmit the signal to the fixed telephone network and to another analogous interior exchange server, in order to establish mobile communication inside and outside buildings and in close proximity to the public way and in means of transport.

The interior exchange servers can be connected by wire with an exterior collective exchange equipped with a microwave transmission and reception function, arranged in buildings, the public way and means of transport, situated at a distance from the users which is above the health safety norms, and adapted in order to be able to transmit the microwave signal in long-distance communication with the relay base-stations and also communication via satellite.

According to another feature of the invention, the interior exchange server is adapted for being installed inside a motor vehicle, and has one, or several, infrared optical sensors incorporated; and is connected with an exterior collective exchange, envisaged for installing on the motor vehicle bodywork and adapted for being used as an external reflector and for receiving and transmitting microwave signals to the relay base-stations and via satellite, so that the metal bodywork is a shield from the microwave radiation on the users.

Alternatively, the interior exchange server can be adapted to be installed on road poles and tall street lights, which have one or several infrared optical sensors incorporated; and be connected by wire or infrared optical signal, with the exterior collective exchange.

Preferably, the phone comprises communication means by hands free means.

The mobile phone according to the invention can also comprise optical communication means with computers, electronic equipment, television and garage remote controls and mechanisms activated by remote control.

According to a variant of the invention, the mobile phone comprises recording and/or reproduction of sound and image means.

In another form, the provision of personal information is provided for, such as a calculator, organiser, clock and alarm and can be adapted with large keyboard and screen in book form, with opening and closing means

According to one embodiment of the invention, the phone can comprise means for picking up photovoltaic energy.

In another embodiment the provision of a prepayment card is contemplated.

The phone according to the invention can also comprise reflecting elements, adapted for amplifying the infrared optical signal and act as mirrors for personal use, fitted with lighting means and luminous signalling.

In another variant, the mobile phone according to the invention comprises waterproof protection means against knocks and is submersible.

The mobile phone of the present invention, lacks a microwave transmitter and emits mere infrared optical signals, communicating with simple or multiple infrared optical sensors and so makes it possible to control the user's self-protection and protect him from serious health risks.

The present invention allows the present domestic cordless phone which emits radio-frequency, to be substituted by inner switchboards which lack a microwave transmitter and offer, within the home, the health "guarantees" demanded by the population.

This invention resolves a current serious health risk for all mobile phone users and makes it possible to work for the entire working day, and for years, "with health guarantees".

One of the advantageous applications of the phone of the present invention consists of being able to measure the microwave immisions on the user, proceeding from uncontrolled microwave emissions, such as microwave ovens, present-day mobile phones and, in particular, base-stations, etc.

As additional advantages, the present invention resolves mobile communication in trains, coaches and motor vehicles, with interior infrared optical sensors, connected with the interior switchboard, which lacks the microwave-emitting function and which, in turn, is connected to the exterior microwave transmitter-receiver placed on the vehicle roof, with the required health safety.

Furthermore, it makes communication with electronic equipment possible and permits maintaining this work activity for hours without any health risk for the user.

The telephone of the invention reduces energy consumption and, in particular, battery consumption, as infrared optical signal communication energy is reduced. It reduces environmental pollution since microwave power transmission is direct to the base-stations within urban centres and also the exchange power supply can be done with the electrical network. It permits the microwave transmitter to be placed in order to be able to transmit the signal gain and with minimum power.

This patent makes it possible to distance base-stations away from urban centres, with reduced overall microwave pollution and reduced consumption.

This new mobile phone with lower battery consumption makes it possible to increase conversation time and increase the features in order to include images.

### Brief description of the drawings.-

Below is a description of preferred, although not exclusive, forms of embodiment of the present invention, accompanied with drawings for enhanced comprehension, and given by way of non-limiting example.

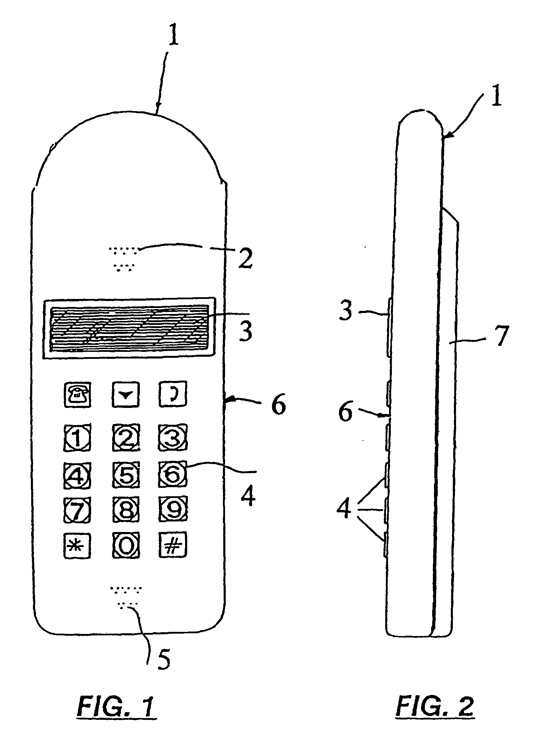

Fig. 1 is a frontal elevation view of a mobile phone according to the invention;
Fig. 2 is a lateral elevation view of the mobile phone in Fig.1;

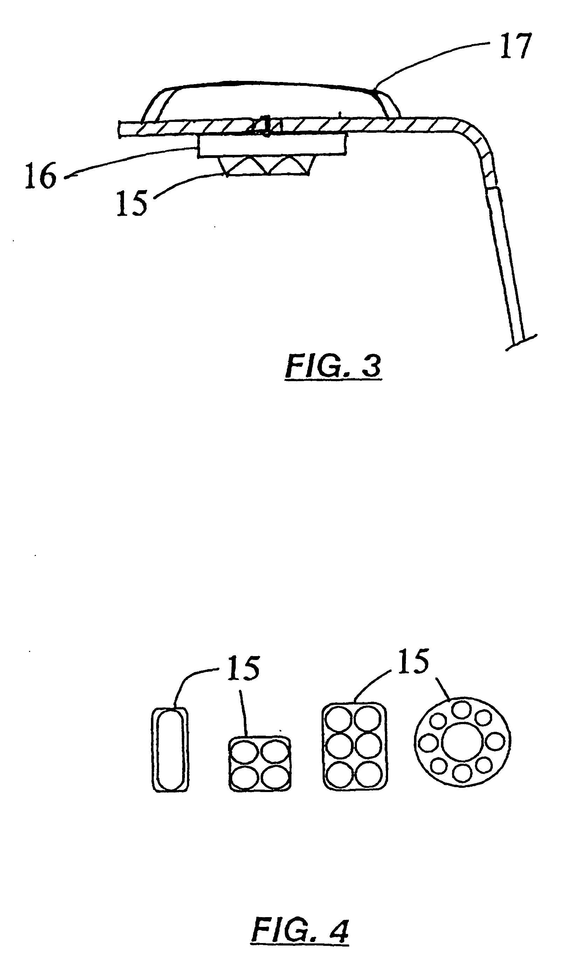

Fig. 3 is a cross-section view illustrative of the mobile phone working principle according to the application system in a motor vehicle, communicated cordlessly with the simple and multiple infrared optical sensor, which can have sensor groups, connected with the interior exchange-server which lacks the microwave-emitting function, and which, in turn, is connected with the exterior exchange-server placed on the motor vehicle roof or means of public transport, separated from the interior by the radiation-proof metal bodywork and which can have means of increasing the gain in order to improve the signal quality and reduce the power.
Fig. 4 is a frontal view of a multiple infrared optical sensor that can include several sensors, the figure showing a linear and parallelepiped shape. Also, a circular-shaped multiple sensor is shown to ease the simultaneous communication and cover the direction angles.

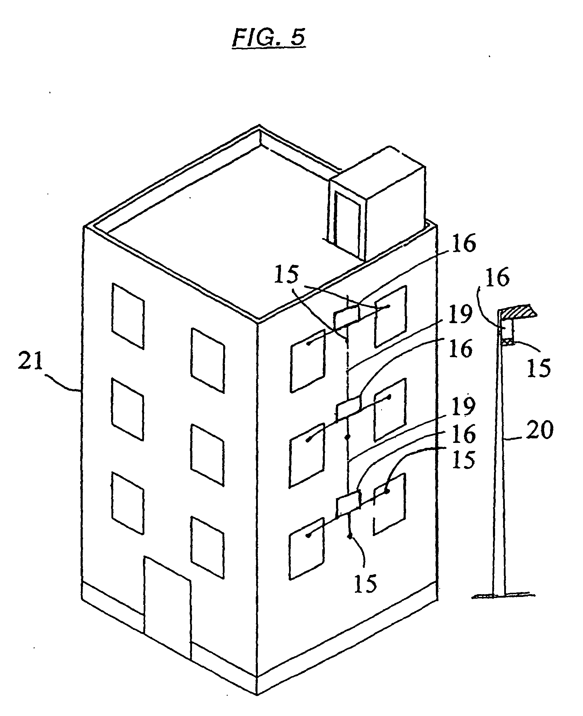

Fig. 5 is a perspective view, which illustrates a mobile phone application mode according to the present invention, in a building interior and close exterior proximity to same, with interior and exterior, simple or multiple, infrared optical sensors, which are connected by wire or infrared optic with the interior switchboard servers, placed indoors and in road poles, which lack microwave-emitting function, and establish communication in close proximity and which, in turn, can be connected by wire with the fixed telephone network.

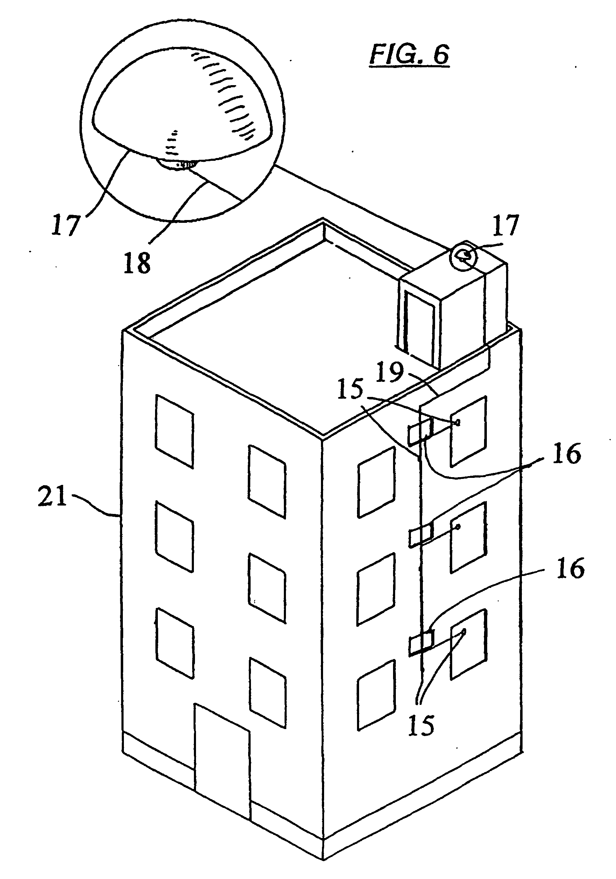

Fig. 6 is a perspective view which illustrates an application according to the present invention, with several interior switchboard servers, which lack the microwave-emitting function, and which are preferably connected by wire with the exterior collective exchange, which has the function of emitting and receiving microwaves and which is placed in the required safety distance, in order to establish communication with distant base-stations, preferably outside of urban centres and via satellite.

### Detailed description of the drawings.-

It said drawings it can be appreciated, in a form which is already well-known, that the mobile phone 1 consists of a loudspeaker element 2, a microphone 5, a keyboard 4, a screen 3, a housing 6 for the mechanical protection of the whole, and a battery 7, or conventional power supply source, all these elements being integral to each other and adapted for the correct operation in contiguity to the user. As its main feature, the mobile phone 1 has a transmitter device and an infrared optical receiver device, which can be simple or multiple, which, owing to the fact that each of them are already in themselves known are not represented individually since they are integrated in the mobile phone housing 6 and can have means for increasing the infrared optical signal quality with parabolic projection means 8.

In Figure 2 a lateral view of the mobile phone 1 can be appreciated with the battery 7 placed in a traditional way, and on the mobile phone housing, as on the battery, the elements for generating photovoltaic energy, already well-known in themselves, can be placed.

The mobile phone 1 is shown in rest position and operating position, forming a compact model with a traditional mobile phone appearance.

Illustrated in Figure 3 is a specific form of application of the mobile phone 1 according to the invention. In this case, the infrared optical sensor 15 is multiple and integral to the interior exchange server 16, which is in the vehicle interior, and at the same time is connected to the microwave exterior or receiving transmitting exchange 17, separated from it by the vehicle's metal bodywork, which is radiation-proof and creates a metal shield providing an additional protection, in such a way that it protects the users from harmful microwave radiations, and makes it easier to establish the connection with faraway base-stations, and to use the vehicle metal bodywork and other disclosed parabolic projection means in order to increase the gain from the receiver transmitter and the communication performance, with enhanced signal quality and reduced power, with less pollution and less energy consumption.

Illustrated in Figure 4 are several ways of placing the multiple infrared optical sensors 15, placed in a linear way by way of example, parallelepiped or also spherically, in order to facilitate the multiple infrared optical communication and establish better signal directional projection towards the mobile phone and other exchange servers.

Illustrated in Figure 5 is a diagrammatic way of placing the infrared optical sensors in windows, interior and exterior building walls, preferably connected by wire 19 with the interior exchange servers 16, and can also have infrared optical cordless communication with other exchange servers which lack a microwave-emitting function and which can be placed in road poles, high lighting means and in traditional phone boxes, connected to one another to establish direct communication in the building interior and in close proximity thereof and can be connected to the telephone network.

Illustrated in Figure 6 is a placement example of the exterior exchange server 17, which has a microwave-transmitting and receiving function arranged at the highest point of a building 21, and which can have signal projection means and increase the gain, which is joined by means of the wiring 18 with the interior exchange servers 16, which lack the microwave-emitting function and can also have infrared optical cordless communication with other exchange servers 16 lacking the microwave-emitting function, each of which is connected by cord 19 or cordlessly with the infrared optical sensors 15, which establish the communication with the mobile phones 1.

The shape of the exterior exchange server 17, which emits and receives microwaves, placed at the highest part of a building and means of transport can be different from the one explained and illustrated in the drawings, as long as the principles of the present invention are respected. Likewise, the fact that it is applied to a motor vehicle does not mean it cannot also be applicable to different interiors, such as a bus, or a train. All of the aforementioned without affecting the scope of the inventive concept.

The nature of the present invention having been described sufficiently, as well as how to put it into practice, it is herein stated that everything which does not alter, change or modify its fundamental principle, can be subject to variations in detail.

In this respect, the shape, constitution and materials of the constituent elements of the mobile phone 1 can be of any kind, being independent of the scope of the invention. In short, the infrared optical receiver transmitter can be simple or multiple and shaped as desired to ease communication and improve the quality of the signal.

Obviously, it should also be pointed out that the microwave receiver transmitter 17 placed on the vehicle roof can be integrated in the curved metal bodywork, in such a way that it is used as a microwave projector, or contributes with other disclosed alternative projection means, which improve the gain and the microwave signal quality.

## Claims

1. Mobile phone (1) for personal communication of the type which comprise a fixed group of basic elements in mobile personal communication, such as a loudspeaker (2), microphone (5), screen (3) and keyboard (4), capable of being handled by the user in contiguity to same, **characterised in that** it comprises transmission means of the communication by means of infrared optical signals and is totally free of microwave-emitting functions.

2. Mobile phone (1) according to claim 1, **characterised in that** it comprises measurement means of the overall microwave power which the user suffers as an immision; and it has a microwave receiver that enables it to receive messages with the connection signal and has means for establishing direct communication by infrared optical signal with other analogous mobile phones.

3. Mobile phone (1) according to claim 1 or 2, **characterised in that** it comprises communication means with infrared optical sensors (15), placed inside and outside buildings (21), urban road poles (20) and inside and outside means of transport, connected by wire or infrared optic with an interior exchange server (16) which is free of the microwave emitting function and which can transmit the signal to the fixed telephone network and to another analogous interior exchange server (16), in order to establish mobile communication inside and outside buildings and in close proximity to the public way and in means of transport.

4. Mobile phone (1) according to claim 3, **characterised in that** the interior exchange servers (16) is connected by wire with an exterior collective exchange (17) equipped with a microwave transmission and reception function, arranged in buildings, the public way and means of transport, situated at a distance from the users which is above the health safety norms, and adapted in order to be able to transmit the microwave signal in long-distance communication with the relay base-stations and also communication via satellite.

5. Mobile phone (1) according to claim 3 and 4, **characterised in that** the interior exchange server (16) is adapted for being installed inside a motor vehicle, and has one, or several, infrared optical sensors incorporated; and is connected with an exterior collective exchange (17) , envisaged for installing on the motor vehicle bodywork and adapted for being used as an external reflector and for receiving and transmitting microwave signals to the relay base-stations and via satellite, so that the metal bodywork is a shield from the microwave radiation on the users.

6. Mobile phone (1) according to claims 3 to 5, **characterised in that** the interior exchange server (16) can be adapted to be installed on road poles and tall street lights, which have one or several infrared optical sensors incorporated; and be connected by wire or infrared optical signal, with the exterior collective exchange (17).

7. Mobile phone (1) according to any of the previous claims, **characterised in that** the phone comprises communication means by hands free means.

8. Mobile phone (1) according to any of the previous claims, **characterised in that** it comprises optical communication means with computers, electronic equipment, television and garage remote controls and mechanisms activated by remote control.

9. Mobile phone (1) according to any of the previous claims, **characterised in that** it comprises recording and/or reproduction of sound and image means.

10. Mobile phone (1) according to any of the previous claims, **characterised in that** it comprises personal information means, such as a calculator, organiser, clock and alarm and can be adapted with large keyboard and screen in book form, with opening and closing means.

11. Mobile phone (1) according to any of the previous claims, **characterised in that** it comprises means for picking up photovoltaic energy.

12. Mobile phone (1) according to any of the previous claims, **characterised in that** it comprises a prepayment card.

13. Mobile phone (1) according to any of the previous claims, **characterised in that** it comprises reflecting elements, adapted for amplifying the infrared optical signal and act as mirrors for personal use, fitted with lighting means and luminous signalling.

14. Mobile phone (1) according to any of the previous claims, **characterised in that** it comprises waterproof protection means against knocks and is submersible.
